# EUROPÄISCHE PATENTSCHRIFT

(11) **EP 3 288 799 B1**
(45) Veröffentlichungstag und Bekanntmachung des Hinweises auf die Patenterteilung: **01.05.2019**
(21) Anmeldenummer: 16717843.3
(22) Anmeldetag: 15.03.2016
(51) Int. Cl.: B60R 7/04, B60R 7/10

(54) **VORRICHTUNG ZUM AUFHÄNGEN VON GEGENSTÄNDEN AN EINEM KRAFTFAHRZEUGSITZ**
APPARATUS FOR HANGING OBJECTS ON A VEHICLE SEAT
DISPOSITIF DE SUSPENSION D'OBJETS SUR UN SIÈGE DE VÉHICULE AUTOMOBILE

(30) Priorität: 01.05.2015 CH 6022015
(43) Veröffentlichungstag der Anmeldung: 07.03.2018
(73) Patentinhaber: Kinetix AG, 7000 Chur (CH)
(72) Erfinder: ACKERET, Peter, verstorben (CH); KELLER, Michael Andreas, 72250 Freudenstadt (DE)
(74) Vertreter: DREISS Patentanwälte PartG mbB
(86) Internationale Anmeldenummer: PCT/EP2016/055595
(87) Internationale Veröffentlichungsnummer: WO 2016/177501

(56) Entgegenhaltungen:
- WO-A1-2010/139452
- WO-A2-2009/112280
- DE-A1- 19 909 879
- JP-A- 2014 094 638

## Beschreibung

Die Erfindung betrifft eine Vorrichtung zum Aufhängen von Gegenständen an einem Kraftfahrzeugsitzteil wie eine Rückenlehne, eine Kopfstütze oder eine Kopfstützenhalterung eines Fahrzeugsitzes.

Solche Vorrichtungen sind in der DE 10 2010 022 392 A1 und der WO 2010/139452 A1 der Anmelderin offenbart, die den Oberbegriff des Anspruchs 1 bilden, auf die verwiesen wird. Die dort gezeigte Vorrichtung umfasst ein Befestigungselement mit einer Aufnahmebuchse zum Anschliessen der Vorrichtung am Fahrzeugsitzteil sowie ein Steckelement das mit der Aufnahmebuchse gekuppelt werden kann mit einer Verriegelungsmechanik zum lösbaren Verriegeln des Steckelements in der Aufnahmebuchse und ein am Steck-element angeordneter Trägerarm zum Aufhängen der Gegenstände.

Der Trägerarm ist hakenförmig ausgebildet und umfasst eine Bodenwand sowie eine am vorderen Ende der Bodenwand angeordnete in etwa vertikal verlaufende Abschlusswand an deren oberem Ende ein in etwa parallel zur Bodenwand verlaufender gegen das Steckelement gerichteter Niederhalter angeordnet ist.

Der Trägerarm ist über ein am hinteren Ende der Bodenwand angeordnetes Drehgelenk mit einer im Wesentlichen parallel zur Breitseite der Rückenlehne und/oder Kopfstütze und horizontal verlaufenden Drehachse mit dem Steckelement verbunden und kann von einer eingeklappten Nichtgebrauchsstellung in der der Trägerarm mit dem Niederhalter gegen das Steckelement gerichtet im Wesentlichen kongruent zur oberen Deckwand des Steckelements an dieser anliegt (Fig. 7 und Fig. 9 der DE 10 2010 022 392 A1) in etwa 180° in eine Gebrauchsstellung ausgeklappt werden, in der der Trägerarm in etwa horizontal ausgerichtet ist (Fig. 8 und Fig. 10 der DE 10 2010 022 392 A1).

Zum ein- und ausklappen des Trägerarms muss ein bestimmter Freiraum vorgesehen werden. Ist die Vorrichtung beispielsweise an den Stangen einer Kopfstützenhalterung befestigt, muss die Kopfstütze entsprechend hoch eingestellt werden, was den Sicherheitsbestimmungen zuwiderlaufen kann.

Wird die Aufnahmebuchse in die Rückenlehne eingebaut muss das Steckelement soweit verlängert werden, dass der Trägerarm in der eingeklappten Nichtgebrauchsstellung ausserhalb der Rückenlehne liegt was in der Gebrauchsstellung zu einem massiven Überstand des Trägerarmes über die Rückenlehne hinaus und zu einer Behinderung oder gar Gefährdung von Passagieren auf dem Rücksitz führt und auch ästhetisch nicht befriedigt.

Der grosse Hebel zwischen Aufnahmebuchse und Befestigungspunkt der Lasten erfordert eine sehr robuste Anbindung der Vorrichtung an das Fahrzeugsitzteil sowie eine sehr stabile und entsprechend kostspielige Ausbildung von Aufnahmebuchse, Steckelement, Drehgelenk und Trägerarm.

Zudem wird der Trägerarm beim Verstellen der Neigung der Rückenlehne in unterschiedliche Schrägstellungen bewegt, so dass zum Ausgleich des Neigungswinkels der Rückenlehne ein verstellbarer Anschlag am Drehgelenk vorgesehen werden müsste, was zu einer substantiellen Verteuerung der Herstellkosten führen würde.

Aus der JP 2014 094638 A ist eine weitere Vorrichtung zum Aufhängen von Gegenständen an einem Kraftfahrzeugsitz bekannt.

Aufgabe der Erfindung ist eine Vorrichtung zum Aufhängen von Gegenständen an einem Kraftfahrzeugsitz zu schaffen welche diese Nachteile eliminiert.

Diese Aufgabe wird durch eine Vorrichtung zum Aufhängen von Gegenständen an einem Kraftfahrzeugsitzteil mit den Merkmalen des Anspruchs 1 gelöst. Weiterbildungen der Erfindung sind in den abhängigen Ansprüchen definiert.

Indem der Trägerarm in einer Gebrauchsstellung mit seiner Längsachse in etwa vertikal nach unten ausgerichtet ist und mit der Längsachse des Steckelements einen Winkel α zwischen etwa 60° und 120°einschliesst ist der Überstand der erfindungsgemässen Vorrichtung über die Rückenlehne hinaus und damit die Behinderung und Gefährdung von Passagieren auf dem Rücksitz minimal.

Zudem ist der Hebelarm zwischen Aufnahmebuchse und Haken wesentlich kürzer, so dass die Belastungen von Aufnahmebuchse, Steckelement, Drehgelenk und Trägerarm wesentlich geringer sind, was eine leichtere und kostengünstigere Bauweise ermöglicht.

Ferner können mit der erfindungsgemässen Vorrichtung bei vertikaler Ausrichtung der Längsachse des Trägerarms sowohl Schrägstellungen der Aufnahmebuchse in der Rückenlehne zwischen etwa horizontal und 30° in Fahrtrichtung nach unten sowie Neigungen der Rückenlehne zwischen etwa vertikal und 30° schräg nach hinten kompensiert und die Vorrichtung so für eine grosse Zahl unterschiedlicher Kraftfahrzeuge mit unterschiedlichen Sitzeinstellungen benutzt werden.

Im Weiteren wird der Trägerarm unabhängig von der Schrägstellung der Aufnahmebuchse in der Rückenlehne und der Neigung der Rückenlehne bei Belastung des Hakens automatisch in eine in etwa vertikale Stellung ausgerichtet.

In einer bevorzugten Ausführungsform könnte durch eine Feder sichergestellt werden, dass der Trägerarm gegen die Rückenlehne vorgespannt ist.

Vorzugsweise ist am Drehgelenk eine Friktionsbremse vorgesehen, so dass zum Drehen des Trägerarms eine gewisse Kraft aufgebracht werden muss.

In einer bevorzugten Ausführungsform ist der Haken am Trägerarm gegen die Rückenlehne gerichtet.

In einer weiteren bevorzugten Ausführungsform ist der Haken am Trägerarm von der Rückenlehne weg gerichtet.

In einer bevorzugten Weiterbildung ist das hintere Ende des Steckelements gabelförmig ausgebildet und das am oberen Ende des Trägerarms angeordnete Drehgelenk zwischen den beiden Gabelenden in Lagerbüchsen gelagert.

In einer weiteren bevorzugten Ausführungsform sind die Gabelenden des Steckelements und das obere Ende des Trägerarms mit dem Drehgelenk komplementär und mit fluchtenden Aussenkonturen ausgebildet und bilden zusammen ein Schutzschild zur Vermeidung von Verletzungen von Passagieren.

In einer weiteren bevorzugten Ausführungsform ist die Aussenkontur des Trägerarms konvex gekrümmt.

In einer bevorzugten Weiterbildung ist der Trägerarm auf den Aussenseiten mit einer separaten Abdeckblende abgedeckt, wobei zwischen dem Trägerarm und der Abdeckblende Hohlräume gebildet werden.

In einer weiteren bevorzugten Ausführungsform ist die Länge des Steckelements so bemessen, dass das Drehgelenk hinter der Rückenlehne liegt.

Weitere Vorteile und Ausgestaltungen der Erfindung ergeben sich aus der Beschreibung und den beiliegenden Zeichnungen.

Es versteht sich, dass die vorstehend genannten und nachstehend noch zu erläuternden Merkmale nicht nur in der jeweils angegebenen Kombination sondern auch in anderen Kombinationen oder in Alleinstellung verwendbar sind ohne den Rahmen der vorliegenden Erfindungen zu verlassen.

Die Erfindung wird nachstehend anhand von bevorzugten Ausführungsbeispielen unter Bezugnahme auf die entsprechenden Zeichnungen näher erläutert.
Fig. 1 zeigt eine Perspektivansicht der mit einem Befestigungselement an der Kopfstützenhalterung eines Kraftfahrzeugsitzes angeschlossenen Vorrichtung mit einem von der Rückenlehne weg gerichteten Haken.
Fig. 2 zeigt eine Ansicht der Vorrichtung gemäss Darstellung in Fig. 1 von hinten.
Fig. 3 zeigt eine Seitenansicht der Vorrichtung gemäss Darstellung in Fig. 2.
Fig. 4 zeigt eine Explosionsansicht einer Variante der Vorrichtung mit einem zweischaligen Trägerarm.
Fig. 5 zeigt eine Perspektivansicht der Vorrichtung gemäss Darstellung in Fig. 3.
Fig. 6 zeigt eine Perspektivansicht einer weiteren Variante der Vorrichtung mit einem gegen die Rückenlehne gerichteten Haken.
Fig. 7 zeigt eine Perspektivansicht mit einer in die Rückenlehne integrierten Aufnahmebuchse mit angeschlossener Vorrichtung.
Fig. 8 zeigt eine Querschnittansicht der Rückenlehne mit integrierter Aufnahmebuchse und angeschlossener Vorrichtung gemäss Darstellung in Fig. 7.

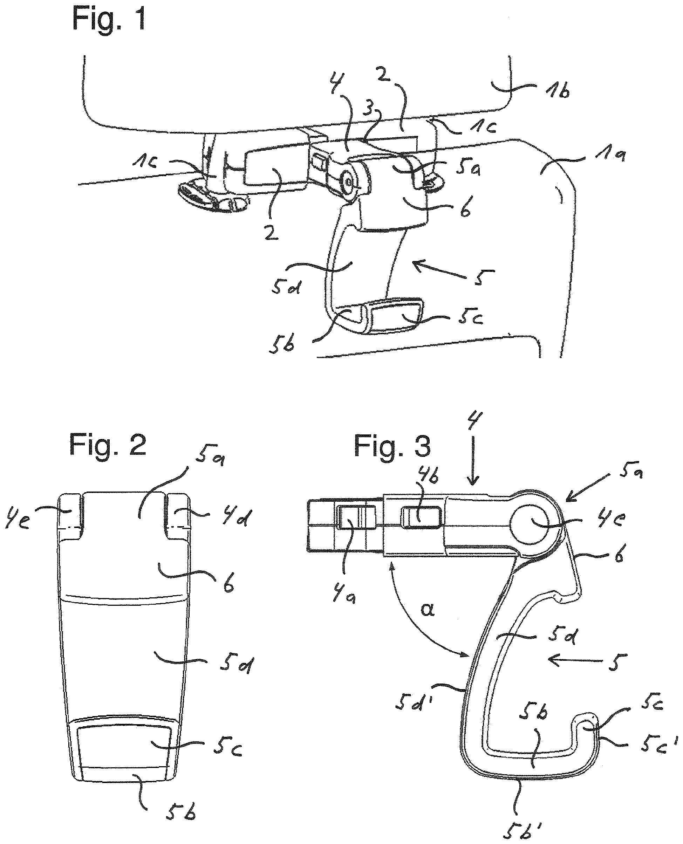

Fig. 1 bis 3 zeigen eine erste Ausführungsform der Vorrichtung. Zwischen der Rückenlehne 1a und der Kopfstütze 1b eines Kraftfahrzeugsitzes 1 ist ein Befestigungselement 2 an den Kopfstützenstangen 1c befestigt (Fig. 1).

Im Befestigungselement 2 ist etwa mittig eine Aufnahmebuchse 3 angeordnet in die ein Steckelement 4 eingesteckt ist. Über das Drehgelenk 5a ist der Trägerarm 5 in der Gebrauchsstellung mit vertikal ausgerichteter Längsachse mit dem hinteren Ende des Steckelements 4 verbunden.

Das hintere Ende des Steckelements 4 ist gabelförmig ausgebildet und mit Lagerbüchsen 4d, 4e versehen, in denen das am oberen Ende des Trägerarms 5 angeordnete Drehgelenk 5a gelagert ist. Das Drehgelenk 5a und die Lagerbüchsen 4d, 4e bilden ein Friktionsscharnier, so dass der Trägerarm 5 in der gewünschten Nichtgebrauchsstellung gehalten wird.

Der Trägerarm 5 umfasst eine mit dem Drehlager 5a verbundene konvex gekrümmte Rückwand an deren unterem Ende ein L-förmiger Haken, bestehend aus dem Hakenboden 5b und der Stützwand 5c, angeordnet ist.

Am oberen Ende der Rückwand 5d ist ein Schutzschild 6 angeordnet der mit dem Drehlager 5a zusammen eine homogene Schutzfläche gegen Verletzungen der Passagiere bildet.

Das Steckelement 4 ist mit der im Befestigungselement 2 angeordneten Aufnahmebuchse 3 kuppelbar und mit beidseitig am Steckelement 4 angebrachten Verriegelungshaken 4a in der Aufnahmebuchse 3 verriegelbar. Diese Verriegelung kann mit den ebenfalls beidseitig am Steckelement 4 angeordneten Lösetasten 4b gelöst werden.

In der Gebrauchsstellung ist der Trägerarm 5 mit seiner Längsachse in etwa vertikal nach unten ausgerichtet und schliesst mit der Längsachse des Steckelements 4 einen Winkel α zwischen etwa 60° und 120°ein, wobei der Winkel α in Fig. 3 90° beträgt.

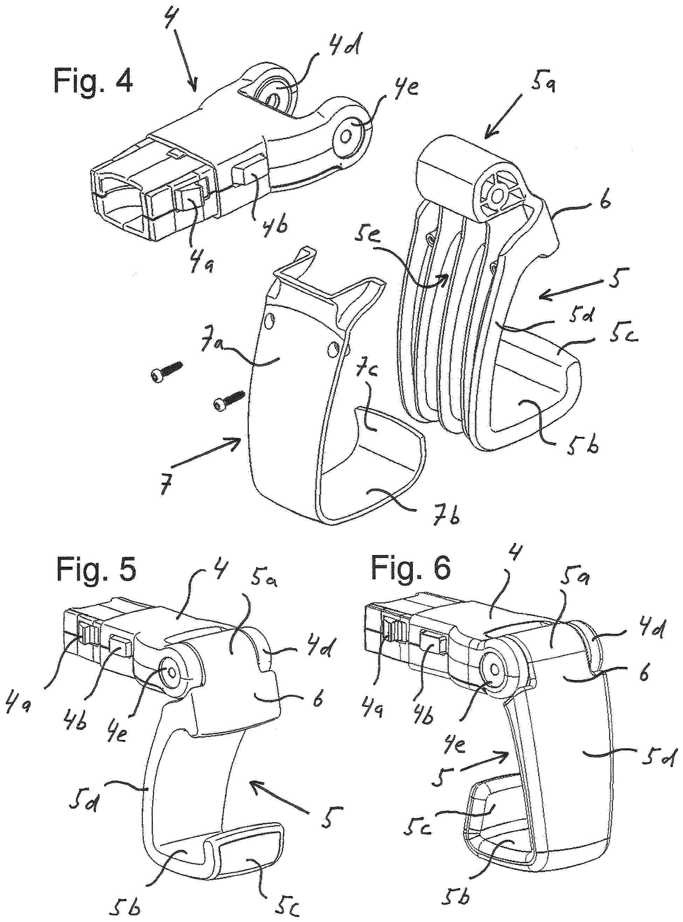

Fig. 4 zeigt den Aufbau eines zweischaligen Trägerarms 5. Die Aussenseiten der Rückwand 5d sowie des Hakenbodens 5b und der Stützwand 5c sind mit einer Abdeckblende 7 abgedeckt. Die Rückwand 5d, der Hakenboden 5b und die Stützwand 5c des Trägerarms 5 sind mit Längsrippen 5e versehen welche die Abdeckblende 7 abstützen und Hohlräume bilden.

Fig. 5 zeigt einen Trägerarm 5 mit einem von der Rückenlehne 1a weg weisenden Haken (5b, 5c) wie in Fig. 1 - Fig. 4 sowie Fig. 7 und Fig. 8 gezeigt.

Fig. 6 zeigt einen Trägerarm 5 mit einem gegen die Rückenlehne (1a) gerichteten Haken (5b, 5c).

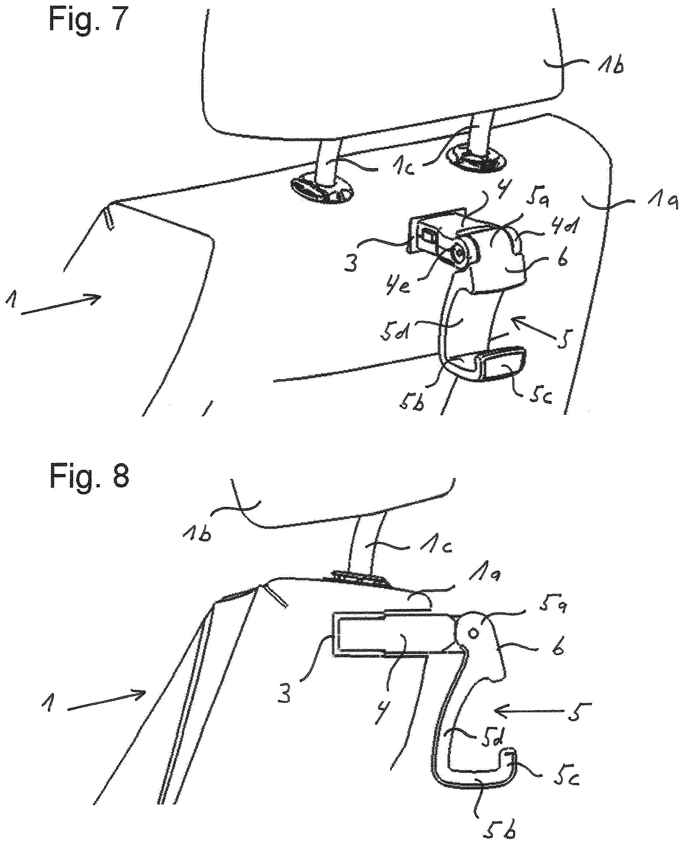

Fig. 7 zeigt die Vorrichtung angeschlossen an einer in eine Rückenlehne 1a integrierten Aufnahmebuchse 3.

Fig. 8 zeigt einen Querschnitt durch die Rückenlehne 1a mit angeschlossener Vorrichtung, gemäss Darstellung in Fig. 7.

## Patentansprüche

1. Vorrichtung zum Aufhängen von Gegenständen an einem Kraftfahrzeugsitzteil wie eine Rückenlehne (1a), eine Kopfstütze (1b) oder eine Kopfstützenhalterung (1c) eines Fahrzeugsitzes (1), umfassend
- ein Befestigungselement (2) mit einer Aufnahmebuchse (3) zum Anschliessen der Vorrichtung am Kraftfahrzeugsitzteil (1a, 1b, 1c),
- ein Steckelement (4), das mit der Aufnahmebuchse (3) gekuppelt werden kann,
- ein Trägerarm (5) zum Aufhängen der Gegenstände, der an einem Ende über ein Drehgelenk (5a) mit einer parallel zur Breitseite der Rückenlehne (1a) und/oder Kopfstütze (1b) und horizontal verlaufenden Drehachse mit dem hinteren Ende des Steckelements (4) verbunden und am anderen Ende mit einem L-förmigen Haken (5b, 5c) versehen ist, **dadurch gekennzeichnet, dass** der Trägerarm (5) in einer Gebrauchsstellung mit seiner Längsachse in etwa vertikal nach unten ausgerichtet ist und mit der Längsachse des Steckelements (4) einen Winkel α zwischen etwa 60° und 120°einschliesst.

2. Vorrichtung nach Anspruch1, wobei der Trägerarm 5 eine mit dem Drehlager (5a) verbundene Rückwand (5d) sowie einen um unteren Ende der Rückwand (5d) angeordneten L-förmiger Haken (5b, 5c) mit einem Hakenboden (5b) und einer Stützwand (5c) umfasst.

3. Vorrichtung nach Anspruch 2, wobei die Aussenseiten (5d') der Rückwand (5d) des Trägerarms (5) konvex gekrümmt ist.

4. Vorrichtung nach Anspruch 2 oder 3, wobei die Aussenseiten der Rückwand (5d) sowie des Hakenbodens (5b) und der Stützwand (5c) mit einer Abdeckblende (7) abgedeckt werden und wobei die Rückwand (5d), der Hakenboden (5b) und die Stützwand 5c des Trägerarms (5) mit Längsrippen (5e) versehen sind welche die Wände (7a, 7b, 7c) der Blende (7) abstützen und Hohlräume bilden.

5. Vorrichtung nach einem der Ansprüche 1 bis 4, wobei das hintere Ende des Steckelements (4) gabelförmig ausgebildet ist und das am oberen Ende des Trägerarms (5) angeordnete Drehgelenk (5a) zwischen den beiden Gabelenden in Lagerbüchsen (4d, 4e) gelagert ist.

6. Vorrichtung nach einem der Ansprüche 1 bis 5, wobei ein am Trägerarm (5) angeordneter Schutzschild (6) zur Abdeckung des Drehgelenks (5a) vorgesehen ist.

7. Vorrichtung nach Anspruch 6, wobei das gabelförmige Ende des Steckelements (4) und das obere Ende des Trägerarms (5) mit dem Drehgelenk (5a) komplementär und mit fluchtenden Aussenkonturen als homogene Fläche ausgebildet sind und den Schutzschild (6) bilden.

8. Vorrichtung nach einem der Ansprüche 1 bis 7, wobei der Haken (5b, 5c) am Trägerarm (5) gegen die Rückenlehne (1a) gerichtet ist.

9. Vorrichtung nach einem der Ansprüche 1 bis 7, wobei der Haken (5b, 5c) am Trägerarm (5) von der Rückenlehne (1a) weg weißt.

10. Vorrichtung nach einem der Ansprüche 1 bis 9, wobei eine Feder vorgesehen ist, die den Trägerarm (5) gegen die Rückenlehne (1a) vorgespannt.

11. Vorrichtung nach einem der Ansprüche 1 bis 10, wobei am Drehgelenk (5a) eine Friktionsbremse vorgesehen ist.

12. Vorrichtung nach einem der Ansprüche 1 bis 11, wobei das Drehgelenk (5a) hinter der Rückenlehne (1a) angeordnet ist.

13. Vorrichtung nach einem der Ansprüche 1 bis 12, wobei eine Verriegelungsmechanik (4a, 4b) zum lösbaren Verriegeln des Steckelements (4) in der Aufnahmebuchse (3) vorgesehen ist.

## Claims

1. Device for suspending objects from a part of a motor vehicle seat, such as a backrest (1a), a headrest (1b) or a headrest mounting (1c) of a vehicle seat (1), comprising
- a fastening element (2) having a receiving socket (3) for attaching the device to the motor vehicle seat part (1a, 1b, 1c),
- a plug-in element (4) which can be coupled to the receiving socket (3),
- a support arm (5) for suspending the objects, which is connected at one end to the rear end of the plug-in element (4) by way of a rotary joint (5a) having an axis of rotation which extends horizontally and in parallel with the broad side of the backrest (1a) and/or headrest (1b), and which is provided with an L-shaped hook (5b, 5c) at the other end, **characterized in that,** in an in-use position, the longitudinal axis of the support arm (5) is oriented approximately vertically downwards and forms, together with the longitudinal axis of the plug-in element (4), an angle α of between approximately 60° and 120°.

2. Device according to claim 1, wherein the support arm (5) comprises a rear wall (5d) which is connected to the rotary bearing (5a), and an L-shaped hook (5b, 5c) which is arranged on the lower end of the rear wall (5d) and has a hook bottom (5b) and a support wall (5c).

3. Device according to claim 2, wherein the outer side (5d') of the rear wall (5d) of the support arm (5) is convexly curved.

4. Device according to claim 2 or 3, wherein the outer sides of the rear wall (5d), the hook bottom (5b) and the support wall (5c) are covered by a covering panel (7), and wherein the rear wall (5d), the hook bottom (5b) and the support wall (5c) of the support arm (5) are provided with longitudinal ribs (5e) which support the walls (7a, 7b, 7c) of the panel (7) and form hollow spaces.

5. Device according to any of claims 1 to 4, wherein the rear end of the plug-in element (4) is fork-shaped, and the rotary joint (5a) arranged on the upper end of the support arm (5) is mounted in bearing sleeves (4d, 4e) between the two fork ends.

6. Device according to any of claims 1 to 5, wherein a protective shield (6) which is arranged on the support arm (5) and is intended for covering the rotary joint (5a) is provided.

7. Device according to claim 6, wherein the fork-shaped end of the plug-in element (4) and the upper end of the support arm (5) are designed to be complementary to the rotary joint (5a) and to have aligned outer contours as a homogenous surface, and form the protective shield (6).

8. Device according to any of claims 1 to 7, wherein the hook (5b, 5c) on the support arm (5) is oriented towards the backrest (1a).

9. Device according to any of claims 1 to 7, wherein the hook (5b, 5c) on the support arm (5) faces away from the backrest (1a).

10. Device according to any of claims 1 to 9, wherein a spring is provided which biases the support arm (5) towards the backrest (1a).

11. Device according to any of claims 1 to 10, wherein a friction brake is provided on the rotary joint (5a).

12. Device according to any of claims 1 to 11, wherein the rotary joint (5a) is arranged behind the backrest (1a).

13. Device according to any of claims 1 to 12, wherein a locking mechanism (4a, 4b) is provided for releasably locking the plug-in element (4) in the receiving socket (3) .

## Revendications

1. Dispositif de suspension d'objets au niveau d'une partie de siège de véhicule automobile, telle qu'un dossier (1a), un appui-tête (1b) ou un support d'appui-tête (1c) d'un siège de véhicule (1), comprenant
- un élément de fixation (2) muni d'une douille de réception (3) pour raccorder le dispositif à la partie de siège de véhicule automobile (1a, 1b, 1c),
- un élément enfichable (4) pouvant être couplé à la douille de réception (3),
- un bras porteur (5) pour suspendre les objets, qui, à une extrémité, est relié à l'extrémité arrière de l'élément enfichable (4) par l'intermédiaire d'une articulation pivotante (5a) ayant un axe de rotation horizontal et parallèle au côté large du dossier (1a) et/ou de l'appui-tête (1b) et, à l'autre extrémité, est muni d'un crochet en L (5b, 5c), **caractérisé en ce que** dans une position d'utilisation, le bras porteur (5) est orienté vers le bas avec son axe longitudinal approximativement vertical et forme avec l'axe longitudinal de l'élément enfichable (4) un angle α compris entre environ 60° et 120°.

2. Dispositif selon la revendication 1, dans lequel le bras porteur (5) comprend une paroi arrière (5d) reliée au palier rotatif (5a) ainsi qu'un crochet en L (5b, 5c) agencé au niveau de l'extrémité inférieure de la paroi arrière (5d) et muni d'un fond de crochet (5b) et d'une paroi d'appui (5c).

3. Dispositif selon la revendication 2, dans lequel les faces extérieures (5d') de la paroi arrière (5d) du bras porteur (5) sont courbées de manière convexe.

4. Dispositif selon la revendication 2 ou 3, dans lequel les faces extérieures de la paroi arrière (5d) ainsi que du fond de crochet (5b) et de la paroi d'appui (5c) sont recouvertes d'un cache (7) et dans lequel la paroi arrière (5d) du fond de crochet (5b) et la paroi d'appui (5c) du bras porteur (5) sont munies de nervures longitudinales (5e) qui renforcent les parois (7a, 7b, 7c) du cache (7) et forment des cavités.

5. Dispositif selon l'une quelconque des revendications 1 à 4, dans lequel l'extrémité arrière de l'élément enfichable (4) est réalisée en forme d'étrier et l'articulation pivotante (5a) agencée au niveau de l'extrémité supérieure du bras porteur (5) est montée dans des coussinets (4d, 4e) entre les deux extrémités d'étrier.

6. Dispositif selon l'une quelconque des revendications 1 à 5, dans lequel un écran de protection (6) agencé au niveau du bras porteur (5) est prévu afin de recouvrir l'articulation pivotante (5a).

7. Appareil selon la revendication 6, dans lequel l'extrémité en forme d'étrier de l'élément enfichable (4) et l'extrémité supérieure du bras porteur (5) sont réalisées complémentaires de l'articulation pivotante (5a) et avec des contours extérieurs alignés formant une surface homogène, et forment l'écran de protection (6).

8. Dispositif selon l'une quelconque des revendications 1 à 7, dans lequel le crochet (5b, 5c) est tourné vers le dossier (1a) au niveau du bras porteur (5).

9. Dispositif selon l'une quelconque des revendications 1 à 7, dans lequel le crochet (5b, 5c) se détourne du dossier (1a) au niveau du bras porteur (5).

10. Dispositif selon l'une quelconque des revendications 1 à 9, dans lequel un ressort qui contraint le bras porteur (5) contre le dossier (1a) est prévu.

11. Dispositif selon l'une quelconque des revendications 1 à 10, dans lequel un frein à friction est prévu au niveau de l'articulation pivotante (5a).

12. Dispositif selon l'une quelconque des revendications 1 à 11, dans lequel l'articulation pivotante (5a) est agencée derrière le dossier (1a).

13. Dispositif selon l'une quelconque des revendications 1 à 12, dans lequel un mécanisme de verrouillage (4a, 4b) destiné à verrouiller l'élément enfichable (4) de manière libérable dans la douille de réception (3) est prévu.
